# EUROPÄISCHE PATENTANMELDUNG

(11) **EP 2 642 098 A1**
(43) Veröffentlichungstag der Anmeldung: **25.09.2013**
(21) Anmeldenummer: 12161146.1
(22) Anmeldetag: 24.03.2012
(51) Int. Cl.: F02C 7/08, F02C 3/34, F23R 3/28, F23R 3/34

(54) **Gasturbinenkraftwerk mit inhomogenem Eintrittsgas**

(71) Anmelder: Alstom Technology Ltd, 5400 Baden (CH)
(72) Erfinder: Guethe, Felix, 4056 Basel (CH); Poyyapakkam, Madhavan, 6343 Rotkreuz (CH); Graf, Frank, 5415 Nussbaumen (CH); Schuermans, Bruno, 1814 La Tour de Peliz (CH); Benz, Eribert, 5413 Birmenstorf (CH)

(57) **Zusammenfassung**

Die Erfindung betrifft ein Verfahren zum Betrieb einer Gasturbine (6), die einen Verdichter (1) mit ringförmiger Eintrittsfläche, mindestens zwei Brenner, eine Brennkammer (4, 14, 15) und eine Turbine (7, 16, 17) umfasst. Gemäss dem Verfahren werden dem Verdichter (1) mindestens ein erster Ansaugteilstrom aus sauerstoffreduziertem Gas (21), das eine Sauerstoffkonzentration hat, die kleiner als die mittlere Sauerstoffkonzentration des Verdichteransaugstroms ist, und mindestens ein zweiter Ansaugteilstrom aus Frischluft (2) in Umfangsrichtung der Eintrittsfläche alternierend zugeführt.

Weiter betrifft die Erfindung ein Gasturbinenkraftwerk mit einer Gasturbine (6) deren Verdichtereinlass (3) mindestens einen ersten Ausschnitt (51) und mindestens einen zweiten Ausschnitt (52) umfasst, die in Umfangsrichtung um einen Verdichtereintritt alternierend angeordnet sind. Wobei eine Zuführung für ein sauerstoffreduziertes Gas (21) an den ersten Ausschnitt (51) und eine Frischluftzuleitung an den zweiten Ausschnitt (52) des Verdichtereinlasses (3) angeschlossen sind.

## Beschreibung

### TECHNISCHES GEBIET

Die vorliegende Offenbarung betrifft ein Verfahren zum Betrieb einer Gasturbine mit zwei Eintrittsströmen unterschiedlicher Gaszusammensetzungen sowie eine Gasturbine mit geteiltem Verdichtereintritt.

### STAND DER TECHNIK

Dem Verdichter von Gasturbinen wird herkömmlich ein möglichst homogenes Gas zur Verdichtung zugeführt. Bei Anwendungen, in denen Gase mit verschiedener Zusammensetzung zur Verfügung stehen, werden diese zunächst vermischt und dann dem Verdichter zugeführt. Beispielsweise wird bei Rezirkulation von Abgasen ein Abgas mit einer von der Frischluft abweichenden Gaszusammensetzung verwendet. Rezirkulation ist eine Technologie, welche grundsätzlich für unterschiedlichste Zwecke bei Gasturbinen eingesetzt werden kann. So beispielsweise für die Kontrolle der Emissionen, für die Reduktion des Abgasvolumens für die Kohlendioxid-Abscheidung etc. Bei der Rezirkulation von Abgasen bei einer Gasturbine wird ein wesentlicher Anteil des Abgases aus dem gesamten Abgasstrom abgezweigt und wird normalerweise, nach Kühlung und Reinigung, dem Eingangsmassenstrom der Turbine respektive dem Kompressor der Turbine wieder zugeführt. Die Abgaszusammensetzung unterscheidet sich erheblich von der Zusammensetzung von frischer Umgebungsluft. Herkömmlich wird der rückgeführte Abgasstrom mit frischer Luft aus der Umgebung vermischt und diese Mischung anschliessend dem Kompressor zugeführt.

Vorteilhaft kann durch Abgasrezirkulation der Kohlendioxid-Partialdruck in den Abgasen erhöht werden, um die Leistungsverluste und Wirkungsgradverluste von Kraftwerken mit Kohlendioxid-Abscheidung zu reduzieren. Weiter ist Abgasrezirkulation mit dem Ziel vorgeschlagen worden, den Sauerstoffgehalt in den Ansauggasen von Gasturbinen zu reduzieren, um dadurch die NOx-Emissionen zu reduzieren.

Im Stand der Technik wird, um bei niedrigem Sauerstoffgehalt der Brenngase eine gute Verbrennung zu gewährleisten, die Frischluft mit den rezirkulierten Abgasen möglichst gut vermischt, um bei Brennkammereintritt ein homogenes Gasgemisch zur Verfügung zu stellen. Ein zur druckverlustarmen Vermischung von Frischluft mit rezirkulierten Abgasen geeigneter Mischer ist beispielsweise aus der W02010/142573 A2 bekannt.

Je nach Betriebsbedingungen kann es in einer Gasturbine mit Vormischbrennern während der Verbrennung zu Stabilitätsproblemen, insbesondere zu Pulsationen (auch als thermoakustischer Schwingungen bezeichnet) kommen. Um Pulsationen zu reduzieren ist aus der W02005095864 bekannt, einzelne Brenner gedrosselt mit Brennstoff versorgt, wodurch die betreffenden Vormischbrenner eine Verbrennungstemperatur aufweisen, die sich von der Verbrennungstemperatur aller übrigen, ungedrosselten Vormischbrennern unterscheidet. Dies führt zu einer Asymmetrie in der Temperaturverteilung der Vormischbrenneranordnung, wodurch wirksam der Ausbildung von Pulsationen innerhalb der Brennkammer entgegen gewirkt werden kann.

Die gedrosselten Brenner arbeiten mit einer gegenüber der durchschnittlichen Heissgastemperatur reduzierten Heissgastemperatur, was aber zu unvollständiger Verbrennung führen kann. Weiter arbeiten die nicht gedrosselten Brenner mit einer erhöhten Heissgastemperatur, was zu höheren NOx- Emissionen führen kann und die Lebensdauer negativ beeinträchtigen kann.

Unvollständige Verbrennung kann insbesondere bei Anlagen mit Abgasrezirkulation, in denen die Eintrittsgase der Gasturbine einen gegenüber Frischluft reduzierten Sauerstoffgehalt aufweisen, zu erhöhten CO- Emissionen (Kohlenmonoxydemissionen) führen.

### DARSTELLUNG DER OFFENBARUNG

Ein Ziel der vorliegenden Offenbarung ist es, ein Verfahren zum zuverlässigen, sauberen und pulsationsarmen Betrieb einer Gasturbine sowie eine Gasturbine zur Durchführung des Verfahrens anzugeben. In dem offenbarten Verfahren wird eine Gasturbinenanlage mit mindestens zwei Ansaugsteilströmen unterschiedlicher Gaszusammensetzungen vorgeschlagen, in dem die unterschiedlichen Sauerstoffkonzentrationen der Ansaugteilströme zur Stabilisierung der Verbrennung genutzt werden.

Das offenbarte Verfahren zeichnet sich dadurch aus, dass bei einer Gasturbine sauerstoffreduziertes Gas und Frischluft getrennt so zugeführt werden, dass dem Verdichter mindestens ein erster Ansaugteilstrom aus sauerstoffreduziertem Gas und mindestens ein zweiter Ansaugteilstrom aus Frischluft in Umfangsrichtung der Eintrittsfläche alternierend zugeführt werden.

Die Gasturbine umfasst einen Verdichter mit einem Eintrittsquerschnitt, eine dem Verdichter nachgeschaltete Brennkammer, in der die verdichteten Gase mit Brennstoff verbrannt werden, und eine Turbine, in der die heissen Verbrennungsgase entspannt werden.

Als sauerstoffreduziertes Gas wird dabei ein Gas bezeichnet, welches eine Sauerstoffkonzentration hat, die kleiner als die mittlere Sauerstoffkonzentration des Verdichteransaugstroms ist. Typischerweise ist die Sauerstoffkonzentration des sauerstoffreduzierten Gases mindestens 1 % kleiner als die mittlere Sauerstoffkonzentration des Verdichteransaugstroms, bevorzugt ist die Sauerstoffkonzentration des sauerstoffreduzierten Gases mindestens 2% kleiner als die mittlere Sauerstoffkonzentration des Verdichteransaugstroms.

Durch die in Umfangsrichtung alternierende Zuführung von Frischluft und sauerstoffreduziertem Gas wird die Reaktionsfähigkeit des Brennstoffes in benachbarten Brennern einer Brennkammer verändert. Die Reaktionsfähigkeit von Brennstoff in frischer Luft ist höher als die von Brennstoff in sauerstoffreduziertem Gas, so dass die Flammposition in einer Brennkammer (oder einem Brennkammerabschnitt), in die sauerstoffreduziertes Gas strömt, gegenüber einer mit Frischluft versorgten Brennkammer stromab versetzt ist. Die unterschiedlichen Reaktionsgeschwindigkeiten und insbesondere die versetzten Flammpositionen verändern die thermoakustischen Eigenschaften der Flamme und können diese stabilisieren, was insbesondere zu einer Reduktion oder Unterdrückung von Pulsationen führt.

Nach einer Ausführung des Verfahrens erfolgt die alternierende Zuführung von sauerstoffreduziertem Gas und Frischluft über einen inneren Sektor des Eintrittsquerschnitts relativ zu einer Rotationsachse des Verdichters und es wird ausserdem Frischluft über einen äusseren Sektor des Eintrittsquerschnitts relativ zu der Rotationsachse des Verdichters zugeführt.

Die in den äusseren Sektor zugeführte Frischluft wird zumindest Teilweise als Kühlluft um die Brennkammer herumgeführt. Eine Zuführung von sauerstoffreduziertem Gas in den äusseren Sektor hätte daher keinen oder wenig Einfluss auf die Verbrennung. Durch die Beschränkung der Zuführung von sauerstoffreduziertem Gas auf den inneren Sektor kann mit einer kleinen Menge von sauerstoffreduziertem Gas die Wirkung auf die Verbrennung optimiert werden. Entsprechend muss für eine gewünschte Wirkung weniger sauerstoffreduziertes Gas zur Verfügung gestellt werden. Die Anlagengrösse und Kosten für deren Bereitstellung und Zuführung verkleinert sich entsprechend.

Nach einer alternativen Ausführung des Verfahren erfolgt die alternierende Zuführung von sauerstoffreduziertem Gas und Frischluft über einen inneren Sektor Eintrittsquerschnitts relativ zu einer Rotationsachse des Verdichters und es wird ausserdem sauerstoffreduziertem Gas über einen äusseren Sektor des Eintrittsquerschnitts relativ zu einer Rotationsachse des Verdichters zugeführt. Dieses Verfahren ist insbesondere dann vorteilhaft, wenn die Sauerstoffkonzentration in den Abgasen minimiert werden soll. Das sauerstoffreduzierte Gas, das über den äusseren Sektor zugeführt wird, zumindest teilweise als Kühlluft um die Brennkammer herumgeführt wird und den heissen Brenngasen als Kühlluft zugemischt wird führt es im Vergleich zu einer herkömmlichen Zumischung von Frischluft als Kühlgas zu einer reduzierten oder zu keiner Anhebung des Sauerstoffgehalts in den Abgasen.

Nach einer Ausführung des Verfahrens wird jeweils ein erster Ansaugteilstrom aus sauerstoffreduziertem Gas in einen oder in ein ganzzahliges Vielfaches an benachbarten Brennern stromab des Verdichters geleitet.

Nach einer weiteren Ausführung des Verfahrens wird jeweils ein zweiter Ansaugteilstrom aus Frischluft in einen oder in ein ganzzahliges Vielfaches an benachbarten Brennern stromab des Verdichters geleitet.

Durch die gezielte alternierende Einleitung von sauerstoffreduziertem Gas und Frischluft in benachbarte Brenner, wird eine möglichst hohe Differenz an Sauerstoffgehalt in den Gasen realisiert. Bei der Einleitung der Ansaugteilströme ist zu berücksichtigen, dass die Ströme in dem Verdichter typischerweise verdreht werden, dass heisst um einen Winkel verdreht um die Rotationsachse des Verdichters aus dem Verdichter austreten.

Nach einer weiteren Ausführung des Verfahrens wird jeweils der zweite

Ansaugteilstrom von Frischluft in jeweils zwei benachbarte Brenner stromab des Verdichters geleitet und/oder jeweils der erste Ansaugteilstrom von sauerstoffreduziertem Gas in jeweils zwei benachbarte Brenner stromab des Verdichters geleitet.

Typischerweise ist die Mischung der Heissgase von zwei benachbarten Brennern in der Brennkammer so gut, dass die Austrittsgase aus der Brennkammer praktisch homogen sind.

Nach noch einer weiteren Ausführung des Verfahrens wird jeweils die Brennstoffzuführung zu einem Brenner, der mit sauerstoffreduziertem Gas versorgt wird, gegenüber der Brennstoffzuführung zu einem Brenner, der mit Frischluft versorgt wird, so reduziert ist, dass die heissen Verbrennungsgase am Austritt der Brennkammer die gleiche Sauerstoffkonzentration aufweisen. Dies Verfahren ist insbesondere dann vorteilhaft, wenn die Vermischung von Heissgasen benachbarter Brenner unterbunden ist oder wenn Ansaugteilströme mit unterschiedlichen Sauerstoffkonzentrationen zu mehr als zwei benachbarten Brenner geleitet werden.

Zur Drosselung der Brennstoffzuführung zu einzelnen Brennern kann in dem Brennstoffverteilsystem vor wenigstens einem der Brenner ein feststehendes oder variables den Brennstoffmassenstrom zu dem wenigstens einen Brenner bestimmendes Drosselorgan angeordnet sein. Dies kann beispielsweise eine Blende oder eine Ventil sein. Dabei kann beispielsweise die Querschnittsreduktion des Drosselorgans so ausgewählt sein, dass eine gewünschte Ungleichheit im Brennstoffverteilsystem hinsichtlich der Brennstoffmassenströme zu den einzelnen Brennern erreicht wird.

Weiter kann zur Brennstoffzuführung zu den einzelnen Brennern (beispielsweise Vormischbrennern) oder Brennergruppen einer Brennkammer beispielsweise eine Ringleitung vorgesehen sein, die jeweils mit Brennstoffleitung jedes einzelnen Brenners verbunden ist. Dabei kann bei einer ersten Gruppe von Brennern, deren Anzahl vorzugsweise kleiner als die Hälfte der in der Brenneranordnung vorgesehenen Gesamtzahl gewählt ist, in wenigstens einer der Brennstoffleitungen eine die Brennstoffzuführung beeinflussende Regeleinheit, beispielsweise ein Drosselventil, oder eine Blende vorgesehen sein. Durch eine geregelte Drosselung der Brennstoffversorgung bezüglich einer ausgewählten Gruppe von Brennern ist es einerseits möglich eine gezielt asymmetrische Wärmezufuhr längs einer annularen Brenneranordnung, z.B. im Rahmen einer Ringbrennkammeranordnung, zu schaffen und somit auf wirksame Weise den brennerbedingten thermoakustischen Schwingungen entgegen zu wirken. Weiter gestattet die regelbare Brennstoffdrosselung eine individuelle Abstimmung des Brennerverhaltens auf grundsätzlich alle den Verbrennungsprozess beeinflussenden Parameter. In Kombination mit einer entsprechend abgestimmten Zuführung von sauerstoffreduziertem Gas und Frischluft kann der positive Effekt auf die Verbrennung verstärkt werden, die NOx Emissionen tief gehalten werden und bei Bedarf eine homogene Sauerstoffkonzentration am Brennkammeraustritt realisiert werden.

Um eine Vermischung von Frischluft und sauerstoffreduziertem Gas so weit wie möglich zu unterbinden wird nach einer Ausführung der Verdichtereinlass, an den der Strömungskanal des Verdichters anschliesst, in mindestens einen ersten Ausschnitt und einen zweiten Ausschnitt geteilt, deren Austritte in Umfangsrichtung um den Verdichtereintritt alternierend angeordnet sind. Dabei wird jeweils abwechselnd Frischluft über den mindestens einen ersten Ausschnitt und sauerstoffreduziertes Gas über den mindestens einen zweiten Ausschnitt zugeführt.

Nach einer alternativen Ausführung des Verfahrens wird das sauerstoffreduzierte Gas über vor dem Verdichtereintritt auf einem Durchmesser des Ansaugkanals konzentrisch zur Rotationsachse des Verdichters in Umfangsrichtung verteilt angeordnete Zuführungen eingeleitet und Frischluft über den eigentlichen

Verdichtereintritt eingeleitet. Dies erlaubt eine Regelung der zugeführten Menge an sauerstoffreduziertem Gas, ohne dass das Strömungsfeld am Eintritt in den Verdichter durch eine starre Geometrie, die den Eintrittsquerschnitt aufteilt, stark beeinflusst wird.

Je nach Betriebskonzept und Gasturbine wird zum Start und bei Teillast der Gasturbine die Zuführung von sauerstoffreduziertem Gas ausgeschaltet oder reduziert. Dies ist beispielsweise erforderlich, um eine stabile, CO-emissionsarme (Kohlenmonoxid) Verbrennung zu gewährleisten. Je nach Trennung der Zuführungen für Frischluft und sauerstoffreduziertes Gas des Eintrittsquerschnitts kann es durch eine Reduktion des sauerstoffreduzierten Gases zu einer Fehlanströmung des Verdichters kommen. Um diese Fehlanströmung zu vermeiden, wird nach einer weiteren Ausführung des Verfahrens wird bei Teillast und/ oder beim Start der Gasturbine Frischluft über ein Regelelement in den ersten Ansaugteilstrom aus sauerstoffreduziertem Gas geleitet.

Eine zuverlässige Quelle für sauerstoffreduziertes Gas ist die Gasturbine selber. Nach einer Ausführung des Verfahrens werden die Abgase der Gasturbine, in einen ersten Abgasstrom zur Rezirkulation in den Ansaugstrom der Gasturbine und in einen zweiten Abgasstrom zur Abgabe an die Umgebung geteilt. Dabei umfasst das sauerstoffreduzierte Gas, der dem Verdichter zugeführt wird, den rezirkulierten ersten Abgasstrom der Gasturbine.

Nach einer weiteren Ausgestaltung des Verfahren wird das Flächenverhältnis der Anschlussfläche des äusseren Sektors an den Strömungskanal des Verdichters zu der Anschlussfläche des inneren Sektors an den Strömungskanal des Verdichters durch ein Regelelement variiert. Es wird dabei so variiert, dass das Flächenverhältnis an Änderungen des Verhältnisses zwischen zugeführter Frischluft und rezirkuliertem ersten Abgasstrom angeglichen wird.

Neben dem Verfahren ist ein Gasturbinenkraftwerk zur Durchführung des Verfahrens Gegenstand der Offenbarung. Ein derartiges Gasturbinenkraftwerk umfasst eine Gasturbine mit einem Verdichtereinlass, einem Verdichter mit ringförmiger Eintrittsfläche, mindestens zwei Brennern, einer Brennkammer und einer Turbine. Gemäss der Offenbarung umfasst der Verdichtereinlass, an den der Strömungskanal des Verdichters anschliesst, mindestens einen ersten Ausschnitt und mindestens einen zweiten Ausschnitt, die in Umfangsrichtung um den Verdichtereintritt alternierend angeordnet sind, wobei eine Zuführung für ein sauerstoffreduziertes Gas, an den mindestens einen ersten Ausschnitt des Verdichtereinlasses angeschlossen ist und eine Frischluftzuleitung an den mindestens einen zweiten Ausschnitt des Verdichtereinlasses angeschlossen ist. Dabei ist das sauerstoffreduzierte Gas ein Gas, das während des Betriebes der Gasturbine eine Sauerstoffkonzentration hat, die kleiner ist als die mittlere Sauerstoffkonzentration des Verdichteransaugstroms.

In einer Ausführungsform des Gasturbinenkraftwerks ist der Verdichtereinlass an den der Strömungskanal des Verdichters anschliesst, weiter in einen inneren Sektor relativ zur Rotationsachse des Verdichters und einen äusseren Sektor relativ zur Rotationsachse des Verdichters aufgeteilt. Dabei sind die alternierenden ersten Ausschnitte und zweiten Ausschnitte in dem inneren Sektor des Eintrittsquerschnitts relativ zur Rotationsachse des Verdichters angeordnet.

Weiter kann eine Frischluftzuleitung an den äusseren Sektor des Verdichtereinlasses angeschlossen sein oder alternativ eine Zuführung für ein sauerstoffreduziertes Gas an den äusseren Sektor des Verdichtereinlasses angeschlossen sein.

In einer alternativen Ausführungsform des Gasturbinenkraftwerks ist der Verdichtereinlass, an die der Strömungskanal des Verdichters anschliesst, einen inneren Sektor relativ zur Rotationsachse des Verdichters und einen äusseren Sektor relativ zur Rotationsachse des Verdichters umfasst, wobei die alternierenden ersten Ausschnitte und zweiten Ausschnitte in dem äusseren Sektor des Eintrittsquerschnitts relativ zur Rotationsachse des Verdichters angeordnet sind.

Weiter kann eine Frischluftzuleitung an den inneren Sektor des Verdichtereinlasses angeschlossen sein oder alternativ eine Zuführung für ein sauerstoffreduziertes Gas an den inneren Sektor des Verdichtereinlasses angeschlossen sein.

In einer Ausführungsform des Gasturbinenkraftwerks ist pro erstem Ausschnitt des Verdichtereinlasses ein ganzzahliges Vielfaches von Brennern angeordnet und pro zweitem Ausschnitt ein ganzzahliges Vielfaches von Brennern angeordnet. Dabei sind die Brenner bevorzugt so angeordnet, dass sie unter Berücksichtigung einer Verdrehung der Strömung, die diese im Betrieb um die Verdichterachse erfährt, stromab jeweils eines ersten oder eines zweiten Ausschnitts des Verdichtereintritts liegen.

Nach einem Ausführungsbeispiel des Gasturbinenkraftwerks sind der mindestens eine erste Ausschnitt und der mindestens eine zweite Ausschnitt durch ein Einlassleitblech getrennt.

Nach einem weitern Ausführungsbeispiel umfasst das Gasturbinenkraftwerk ein Regelelement, durch das das Flächenverhältnis der Anschlussfläche des ersten Ausschnitts an den Strömungskanal des Verdichters zu der Anschlussfläche des zweiten Ausschnitts an den Strömungskanal des Verdichters variiert werden kann, um das Flächenverhältnis an Änderungen des Verhältnisses zwischen zugeführter Frischluft und sauerstoffreduziertem Gas anzugleichen.

In einem weiteren Ausführungsbeispiel ist eine Vielzahl von Zuführungskanälen zur Einleitung des sauerstoffreduzierten Gases konzentrisch zur Achse der Gasturbine in Umfangsrichtung verteilt angeordnet. Insbesondere können diese Zuführungskanäle als Rohre ausgeführt sein. In einem Beispiel sind diese Zuführungskanäle in dem inneren Sektor des Verdichtereinlasses angeordnet. Die Rohre können einzeln oder als Rohrbündel angeordnet sein. Sie können weiter mit einem Profil, das bevorzugt eine strömungsdynamische Form mit niedrigem Strömungswiederstand aufweist, umgeben sein. Zur Anordnung können exsistierende Elemente im Verdichtereinlass genutzt werden, wie beispielsweise die Lagerstützen des Verdichterlagers.

Die Einleitung über einzelne Rohre oder Gruppen von Rohrbündeln erlaubt eine Regelung des sauerstoffreduzierten Gases, ohne dass das Strömungsfeld am Eintritt in den Verdichter durch eine starre Geometrie, die den Eintrittsquerschnitt aufteilt, stark beeinflusst wird.

Noch eine Ausführung des Gasturbinenkraftwerks umfasst ein Regelelement, durch das das Flächenverhältnis der Anschlussfläche des äusseren Sektors an den Strömungskanal des Verdichters zur Anschlussfläche des inneren Sektors an den Strömungskanal des Verdichters variiert oder geregelt werden kann. Alternativ oder in Kombination umfasst das Gasturbinenkraftwerk ein Regelelement, durch das das Flächenverhältnis der Summe der Anschlussflächen des mindestens einen ersten Ausschnitts an den Strömungskanal des Verdichters zur Summe der Anschlussflächen des mindestens einen zweiten Ausschnitts an den Strömungskanal des Verdichters variiert werden kann. Durch diese Variation oder Regelung kann das Flächenverhältnis an Änderungen des Verhältnisses zwischen zugeführter Frischluft und sauerstoffreduziertem Gas angeglichen werden. Insbesondere ist eine Regelung des Flächenverhältnisses in Abhängigkeit von dem Verhältnis zwischen Volumenstrom an zugeführter Frischluft und sauerstoffreduziertem Gas vorteilhaft.

Nach einem Ausführungsbeispiel umfasst das Gasturbinenkraftwerk einem Abgasteiler zur Aufteilung des Abgasstroms der Gasturbine in einen ersten Abgasteilstrom, der im Betrieb der Gasturbine in den Ansaugstrom der Gasturbine rezirkuliert wird, und einen zweiten Abgasteilstrom, der im Betrieb der Gasturbine an die Umgebung abgegeben wird. Weiter umfasst ein derartiges Gasturbinenkraftwerk eine Rezirkulationsleitung, die von dem Abgasteiler zu mindestens einem ersten Ausschnitt des Verdichtereinlasses führt.

Alle erläuterten Vorteile sind nicht nur in den jeweils angegebenen Kombinationen, sondern auch in anderen Kombinationen oder Alleinstellung verwendbar, ohne den Rahmen der Offenbarung zu verlassen. Die Offenbarung ist ohne Einschränkung für Gasturbinen mit einer Brennkammer sowie für Gasturbinen mit sequentieller Verbrennung, wie sie beispielsweise aus der EP0718470 bekannt sind, anwendbar.

### KURZE BESCHREIBUNG DER ZEICHNUNGEN

Bevorzugte Ausführungsformen der Offenbarung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung eines Gasturbinenkraftwerks mit Rückführung der Abgase nach Stand der Technik;
- Fig. 2: eine schematische Darstellung eines Gasturbinenkraftwerks mit Rückführung der Abgase und in Umfangsrichtung der Eintrittsfläche alternierend zugeführter Einleitung von Abgasen und Frischluft in den Verdichter;
- Fig. 3: eine perspektivische Ansicht eines geteilten Verdichtereinlasses zur in Umfangsrichtung alternierenden Einleitung von rezirkulierten Abgasen und Frischluft;
- Fig. 4: eine schematische Darstellung eines Gasturbinenkraftwerks mit Rückführung der Abgase und sowohl in Umfangsrichtung der Eintrittsfläche alternierender als auch in radialer Richtung gestufter Einleitung von rezirkulierten Abgasen und Frischluft in den Verdichter;
- Fig. 5: eine schematische Darstellung eines Querschnittes durch einen Verdichtereinlass mit in Umfangsrichtung alternierend angeordneten Ausschnitten zur Zuführung von Frischluft und sauerstoffreduziertem Gas;
- Fig. 6: eine schematische Darstellung eines Querschnittes durch einen Verdichtereinlass mit in Umfangsrichtung alternierend angeordneten Ausschnitten zur Zuführung von Frischluft und sauerstoffreduziertem Gas sowie in radialer Richtung gestufter Einleitung;
- Fig. 7: eine schematische Darstellung eines Verdichtereinlasses und Verdichters eines Gasturbinenkraftwerks mit Rückführung der Abgase über eine Vielzahl von alternierend um die Gasturbinenachse im Verdichtereinlass angeordneten Zuführungskanälen;
- Fig. 8: eine schematische Darstellung eines Verdichtereinlasses und Verdichters eines Gasturbinenkraftwerks mit Rückführung der Abgase über eine Vielzahl von in den Lagerstützen vor dem Verdichter angeordneten Zuführungskanälen.

### DETAILIERTE BESCHREIBUNG

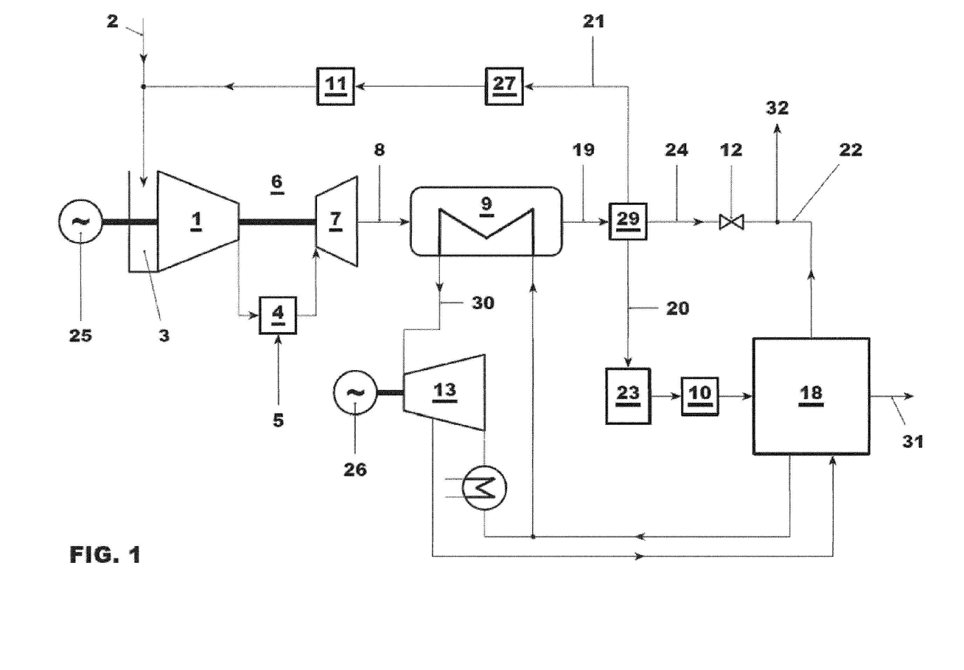

Fig. 1 zeigt in schematischer Darstellung die wesentlichen Elemente eines Gasturbinenkraftwerks. Die Gasturbine 6 umfasst einen Verdichter 1 (Kompressor), die darin verdichtete Verbrennungsluft wird einer Brennkammer 4 zugeführt und dort mit Brennstoff 5 verbrannt. Anschliessend werden die heissen Verbrennungsgase in einer Turbine 7 entspannt. Die in der Turbine 7 erzeugte Nutzenergie wird dann zum Beispiel mit einem auf der gleichen Welle 37 angeordneten ersten Generator 25 in elektrische Energie umgewandelt.

Die aus der Turbine 7 austretenden heissen Abgase 8 werden zur optimalen Nutzung der darin noch enthaltenen Energie in einem Abhitzedampferzeuger 9 (Heat recovery steam generator, HRSG) dazu verwendet, Frischdampf 30 für eine Dampfturbine 13 oder für andere Anlagen zu erzeugen. Die in der Dampfturbine 13 erzeugte Nutzenergie wird dann zum Beispiel mit einem auf der gleichen Welle 37 angeordneten zweiten Generator 26 in elektrische Energie umgewandelt. Der Wasserdampfkreislauf ist in dem Beispiel vereinfacht und nur schematisch dargestellt. Verschiedene Druckstufen, Speisewasserpumpen usw. werden nicht gezeigt, da diese nicht Gegenstand der Erfindung sind.

Die Abgase vom Abhitzedampferzeuger 19 werden bei einer solchen Anlage hinter dem Abhitzedampferzeuger 9 in einem Abgasteiler 29, welcher geregelt sein kann, in einen ersten Abgasteilstrom 21 und einen zweiten Abgasteilstrom 20 geteilt. Der erste Abgasteilstrom 21 wird in die Ansaugleitung der Gasturbine 6 zurückgeführt und dort mit Frischluft 2 vermischt. Der nicht zurückgeführte zweite Abgasteilstrom 20 wird an die Umgebung abgegeben oder wie in diesem Beispiel über einem Abgasrückkühler 23 weiter gekühlt und einem CO2-Abscheidsystem 18 zugeführt. Von diesem werden CO2- arme Abgase 22 über einen Kamin 32 an die Umgebung abgegeben. Um die Druckverluste des CO2-Abscheidsystems 18 und der Abgasleitung zu überwinden kann ein Abgasgebläse 10 vorgesehen sein. Das in dem CO2-Abscheidsystem 18 abgeschiedene CO2 31 wird typischerweise komprimiert und zur Lagerung oder weiteren Behandlung abgeleitet. Das CO2-Abscheidsystem 18 wird über eine Dampfextraktion mit aus der Dampfturbine 13 abgezweigtem Dampf versorgt.

Der zweite Abgasteilstrom kann auch direkt über einen Abgasbypass 24 mit Bypassklappe 12 zu dem Kamin 32 geführt werden.

Der zurückgeführte erste Abgasstrom 21 wird in einem Abgasrückkühler 27, welcher mit Kondensator ausgestattet sein kann, auf etwas über Umgebungstemperatur abgekühlt. Stromab dieses Abgasrückkühlers 27 kann ein Booster oder Abgasgebläse 11 für den Rezirkulationsstrom 21 angeordnet sein. Dieser zurückgeführte Abgasstrom 21 wird mit der Frischluft 2 vermischt, bevor das Gemisch als Ansaugstrom über den Verdichtereinlass 3 der Gasturbine 6 zugeführt wird.

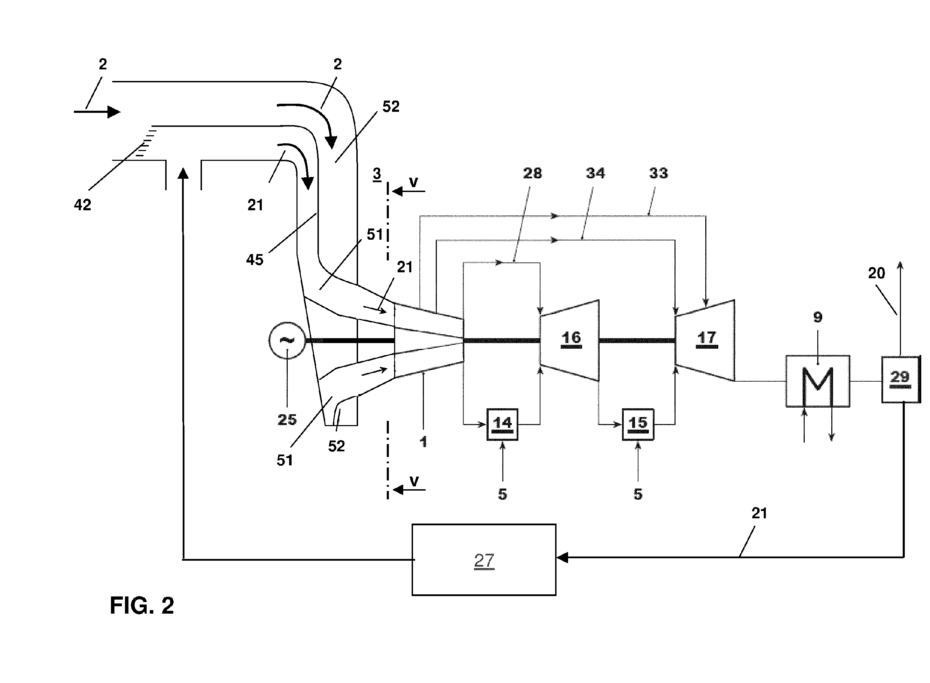

In Fig. 2 eine Gasturbine mit sequentieller Verbrennung dargestellt. Das Verfahren ist für Gasturbinen mit einer Brennkammer sowie für Gasturbinen mit sequentieller Verbrennung anwendbar. Entsprechend sind auch Ausführungen für Gasturbinen mit einer Brennkammer sowie für Gasturbinen mit sequentieller Verbrennung möglich.

Fig. 2 zeigt schematisch ein Ausführungsbeispiel eines Gasturbinenkraftwerks mit einem Verdichtereinlass 3, der in mindestens zwei Ausschnitte aufgeteilt ist, wobei eine Zuführung für den Abgasstrom 21 in einen ersten Ausschnitt 51 des Verdichtereinlasses 3 mündet, der in der gezeigten Seitenansicht sichtbar ist. Weiter mündet eine Zuführung für Frischluft 2 über einen zweiten Ausschnitt 52 des Verdichtereinlasses 3 am Verdichtereintritt, wobei dieser zweite Ausschnitt 52 ausserhalb der gezeigten Ebene liegt.

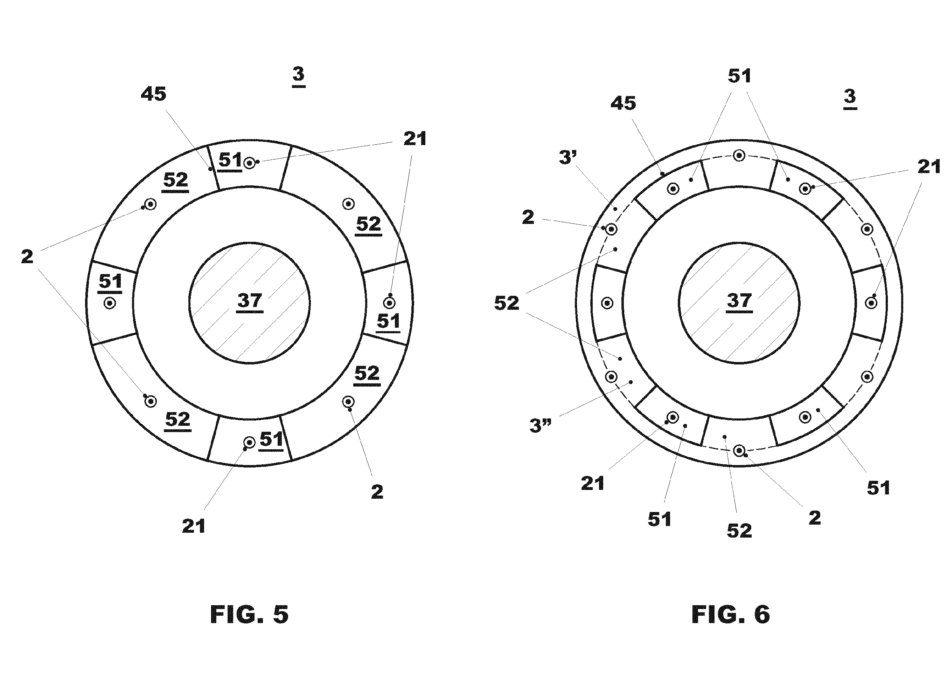

Die beiden Ausschnitte 51, 52 schliessen auf der dem Kompressor zugewandten Seite des Verdichtereinlasses 3 möglichst unmittelbar an den Strömungskanal des Verdichters 1 an. Der erste Ausschnitt 51 für rezirkulierte Abgase und der zweite Ausschnitt 52 für Frischluft münden dabei alternierend an eine Ringfläche des Strömungskanals. Die entsprechende Aufteilung der Ausschnitte in Umfangrichtung des Verdichtereinlasses 3 am Schnitte v-v ist in Fig. 5 dargestellt.

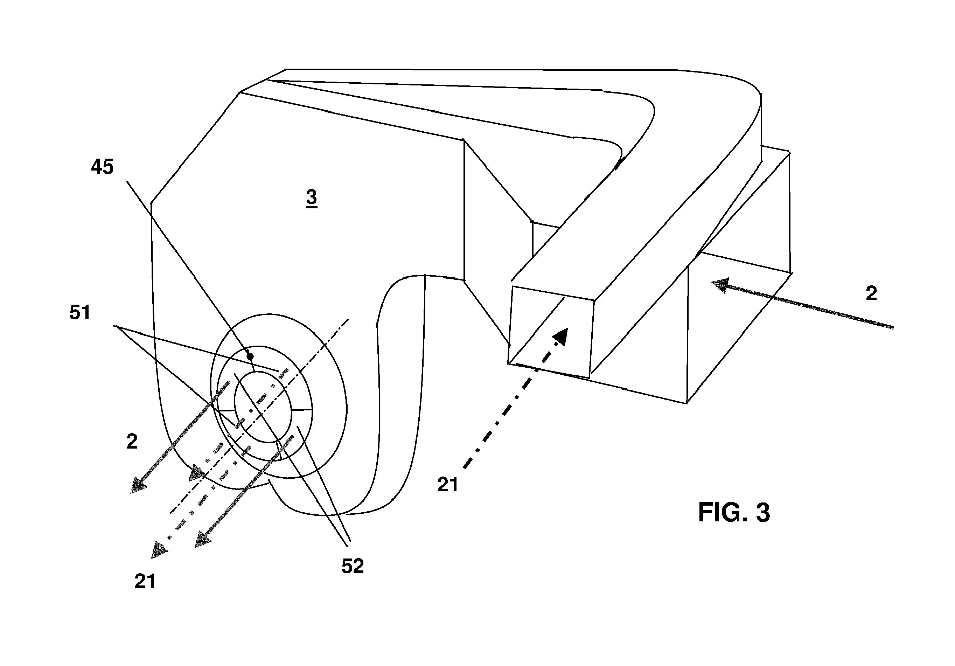

Fig. 3 zeigt perspektivisch eine schematische Darstellung eines geteilten Verdichtereinlasses mit in Umfangsrichtung alternierend angeordneten Ausschnitten 51, 52 zur Zuführung von Frischluft 2 und sauerstoffreduziertem Gas 21.

In dem gezeigten Beispiel wird die Frischluft 2 von einer Seite zu einem Bereich des Verdichtereinlasses 3 zugeführt, in diesem horizontal umgelenkt und nach einer weiteren Umlenkung in Richtung der Gasturbinenachse dem Verdichter zugeführt. Weiter wird das sauerstoffreduzierte Gas 21, beispielsweise ein rezirkulierter erster Abgasteilstrom 21, axial entgegen der Hauptströmungsrichtung der Gasturbine zu einer Ebene stromauf des Verdichtereinlasses 3 geleitet, in einem weiteren Bereich des Verdichtereinlasses 3 umgelenkt und von der Seite oberhalb der Gasturbinenachse vor den Eintritt in die Gasturbine geleitet. Durch eine zweite Umlenkung wird das sauerstoffreduzierte Gas 21 in Richtung der Höhe der Gasturbinenachse geleitet und dem Verdichter nach einer weiteren Umlenkung zugeführt. Die beiden Bereiche des Verdichtereinlasses 3 sind durch eine Trennwand oder eine Einlassleitblech 45 getrennt, die den Verdichtereinlass 3 vor dem Verdichtereintritt in erste Ausschnitte 51 zur Zuführung von sauerstoffreduziertem Gas 21 und zweite Ausschnitte 52 zur Zuführung von Frischluft 2 teilt. Die Ausschnitte 51, 52 sind ringförmig um die Welle der Gasturbine angeordnet.

Nach einer Ausführung reichen die Zuführungen bis in einen Bereich des Verdichtereinlasses 3, in dem aufgrund der Strömungsgeschwindigkeit der von dem Verdichter angesaugten Strömung der statische Druck so reduziert ist, dass das sauerstoffreduzierte Gas 21 in den Verdichter 1 gesogen wird und beispielsweise bei einer Anlage mit Abgasrezirkulation auf ein Gebläse zur Abgasrezirkulation verzichtet werden kann.

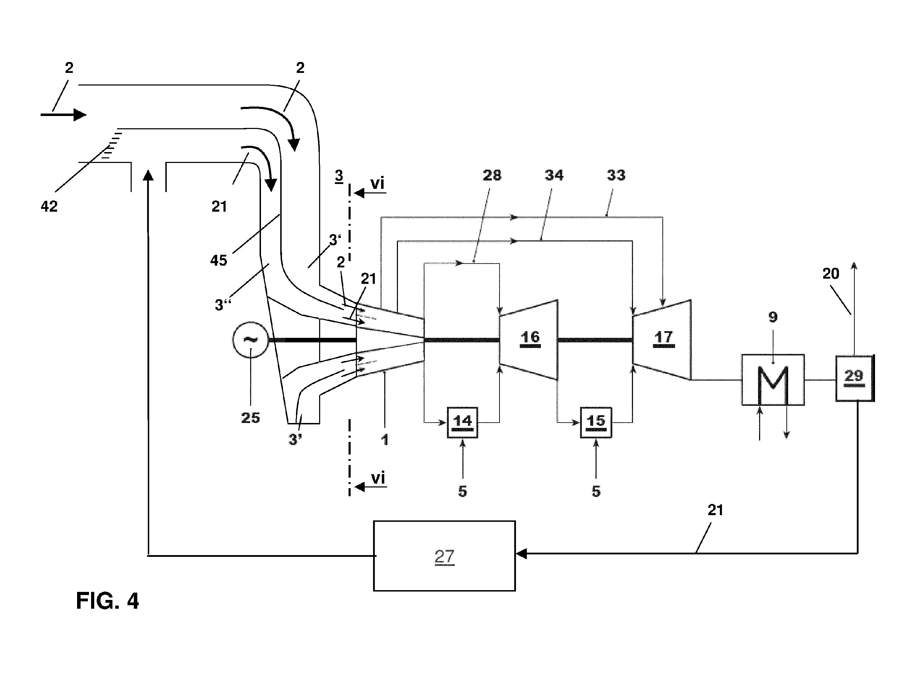

Das Ausführungsbeispiel der Fig. 4 basiert auf dem der Fig. 2. Zusätzlich zu der in Umfangsrichtung alternierenden Einteilung in Ausschnitte 52, 51 zur Frischluftzuführung 2 und zur Zuführung von rezirkulierten Abgasen 21 ist in diesem Beispiel der Einlass in Einlasssektoren 3', 3" aufgeteilt. Diese Sektoren 3', 3" schliessen auf der dem Kompressor zugewandten Seite des Verdichtereinlasses 3 unmittelbar an den Strömungskanal des Verdichters 1 an. Der äussere Sektor 3' ist nicht weiter unterteilt. Die Frischluftzuführung mündet dabei an eine äussere Ringfläche des Strömungskanals. Der innere Sektor 3" ist in alternierende Ausschnitte 51, 52 aufgeteilt, wobei erste Ausschnitt 51 für rezirkulierte Abgase und der zweite Ausschnitt 52 für Frischluft für Abgasrezirkulation an eine innere Ringfläche des Strömungskanals anschliessen.

Die beiden Ausschnitte 51, 52 des inneren Sektors 3" und der äussere Sektor 3" schliessen auf der dem Kompressor zugewandten Seite des Verdichtereinlasses 3 möglichst unmittelbar an den Strömungskanal des Verdichters 1 an. Der erste Ausschnitt 51 für rezirkulierte Abgase und der zweite Ausschnitt 52 für Frischluft mündet dabei alternierend an eine Ringfläche des Strömungskanals im inneren Sektor 3" des Verdichtereinlasses 3. In der gezeigten Seitenansicht ist eine Zuführung für den Abgasstrom 21 in einen ersten Ausschnitt 51 des Verdichtereinlasses 3 sichtbar. Weiter mündet eine Zuführung für Frischluft 2 über einen zweiten Ausschnitt 52 des Verdichtereinlasses 3 am Verdichtereintritt, wobei dieser zweite Ausschnitt 52 ausserhalb der gezeigten Ebene liegt.

Die entsprechende Aufteilung der Ausschnitte 51, 52 und Sektoren 3', 3" des Verdichtereinlasses 3 am Schnittes vi-vi ist in Fig. 6 dargestellt.

Von der radialen Aussenwand des Verdichters 1 wird Nieder- und Mitteldruck-Kühlgas 33, 34 abgezweigt und den Heissgasteilen der Gasturbine zur Kühlung zugeführt. Weiter wird am Ende des Verdichters von der radialen Aussenwand des Verdichters oder des anschliessenden Diffusors Hochdruckkühlgas 28 abgezweigt und den Heissgasteilen der Gasturbine zur Kühlung zugeführt. In den Figuren 32 und 4 ist vereinfachend nur eine Kühlgaszuführung zu der Hochdruckturbine 16 und zwei zur Niederdruckturbine 17 dargestellt. Vereinfachend ist eine Kühlgaszuführung zu den Brennkammern 14, 15 nicht dargestellt, wobei die Hochdruckbrennkammer 14 typischerweise mit Hochdruckkühlluft 28 gekühlt wird und die Niederdruckbrennkammer 15 typischerweise mit Mitteldruckkühlluft 34 gekühlt wird. Da die sauerstoffreiche Frischluft in den Aussenbereich des Verdichters geleitet wird, wird diese zu einem grossen Teil als Kühlgas 33, 34, 28 um die Brennkammern 14, 15 herumgeführt, während die sauerstoffarmen rezirkulierten Abgase im Kernbereich des Verdichters 1 bis zum Verdichterende verdichtet wird und in die Hochdruckbrennkammer 14 gelangt. Durch die Trennung der Gaszuführung im Verdichtereinlass 3 wird ein grosser Anteil an sauerstoffarmen rezirkulierten Abgasen in die Hochdruckbrennkammer 14 geleitet.

Um bei verschiedenen Betriebszuständen der Gasturbine und den damit verbunden Änderungen des Anteils an rezirkuliertem Abgas 21 und der Verdichteransaugmenge ein homogenes Geschwindigkeitsprofil in der Zuströmung zu dem Verdichter zu realisieren, kann in den in Figuren 2 bis 6 gezeigten Ausführungsbeispielen ein Regelelement 42 vorgesehen werden, über das dem ersten Abgasteilstrom 21 Frischluft 2 zugemischt werden kann, bevor dieser die ersten Ausschnitte 51 in den Verdichter 1 eingeleitet wird.

Fig. 5 zeigt eine schematische Darstellung eines Querschnittes durch einen Verdichtereinlass 3 mit in Umfangsrichtung alternierend angeordneten Ausschnitten 51, 52 zur Zuführung von Frischluft 2 und sauerstoffreduziertem Gas 21. Die ersten Ausschnitte 51 sind jeweils zur Zuführung von sauerstoffreduziertem Gas 21 vorgesehen und die zweiten Ausschnitte 52 sind jeweils zur Zuführung von Frischluft 2 vorgesehen. Die Ausschnitte 51, 52 sind ringförmig um die Welle 37 der Gasturbine angeordnet und durch Einlassleitbleche 45 voneinander getrennt.

Fig. 6 zeigt eine schematische Darstellung eines Querschnittes durch einen in radialer Richtung gestuften Verdichtereinlass 3. Der innere Sektor 3" und äusseren Sektor 3' sind jeweils entlang erster Ausschnitte 51 durch ein Einlassleitblech 45 getrennt. Durch den äusseren Sektor 3' wird über den gesamten Umfang Frischluft zugeführt. Durch den inneren Sektor 3" wird in Umfangsrichtung alternierend Frischluft und sauerstoffreduziertem Gas zugeführt. Sauerstoffreduziertes Gas wird jeweils über die ersten Ausschnitte 51 und Frischluft jeweils über die zweiten Ausschnitte 52 zugeführt. Die ersten und zweiten Ausschnitte 51, 52 sind in Umfangsrichtung durch die Einlassleitbleche 45 getrennt. Im Bereich des jeweils zweiten Ausschnittes 52 sind der innere Sektor 3" und äussere Sektor 3' nicht mechanisch getrennt. Die Sektorgrenze ist nur zur Veranschaulichung gestrichelt angedeutet.

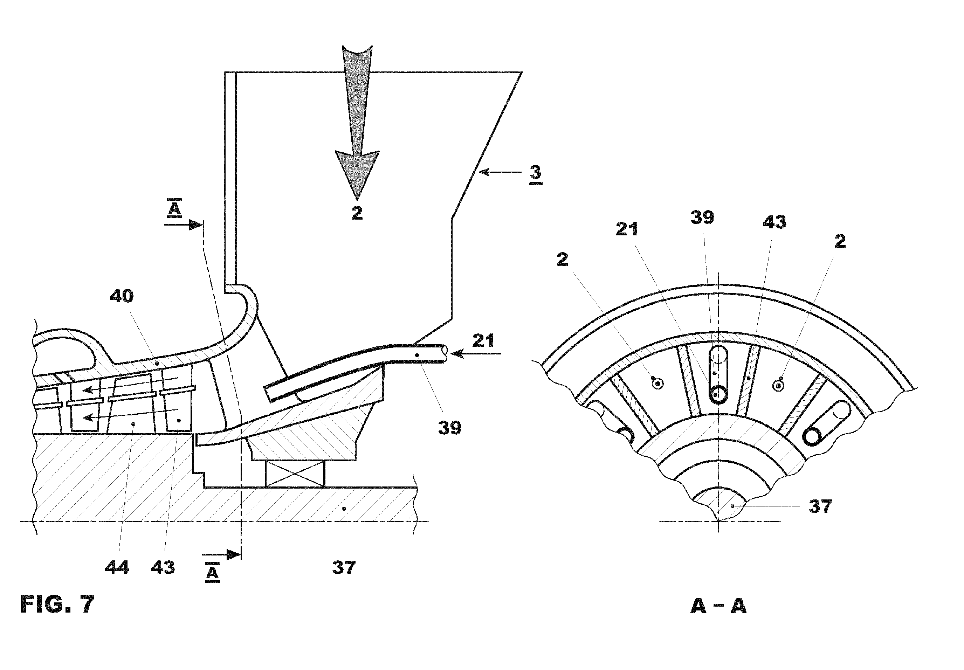

Fig.7 zeigt eine alternative Zuführung für sauerstoffreduziertes Gas 21. Anstelle einer separaten Zuführung der rezirkulierten Abgase 21 über einen durch ein Blech abgeteilten zweiten Ausschnitt 52 des Verdichtereinlasses 3 wird ein ungeteilter Verdichtereinlass 3 benutzt. Das sauerstoffreduzierte Gas 21 wird über eine Vielzahl von kranzförmig axial anordneten in den Verdichtereinlass 3 hineinreichenden Zuführungskanälen 39 eingeleitet, wobei der Abstand zwischen benachbarten Zuführungskanälen 39 so gross gewählt ist, dass zwischen jeweils zwei benachbarten Zuführungskanälen 39 ein zweiter Ausschnitt 52 des Verdichtereintritts 3 verbleibt, in dem Frischluft 2 zugeführt wird. Als Zuführungskanal 39 eignen sich beispielsweise Rohre oder Rohrstutzen, deren Austrittsenden parallel zur Hauptströmung in Richtung Verdichtereintritt ausgerichtet sind. In dem gezeigten Beispiel reichen die Rohrstutzen bis in die Einlaufdüse (Bellmouth) des Verdichters 1 hinein, um eine Vermischung mit Frischluft 2 zu minimieren. Die in Umfangsrichtung alternierende Zuführung von sauerstoffreduziertem Gas 21 und Frischluft 2 ist in Schnitt A - A erkennbar.

Die Rohrstutzen können auch noch im eigentlichen Verdichtereinlass 3 enden oder schon an der Wand des Verdichtereinlasses 3 enden. Bevorzugt sollten die Enden ringförmig um die Achse der Gasturbine angeordnet sein.

Die Ausführung mit einer Vielzahl von Zuführungskanälen 39 hat den Vorteil, dass kein Einlassleitblech 45 zur Trennung des Verdichtereinlasses 3 benötigt wird.

Dies hat im Betrieb den Vorteil, dass das Verhältnis von Frischluft zu rezirkuliertem Abgas unabhängig von dem Flächenverhältnis der Einlasssektoren geändert werden kann.

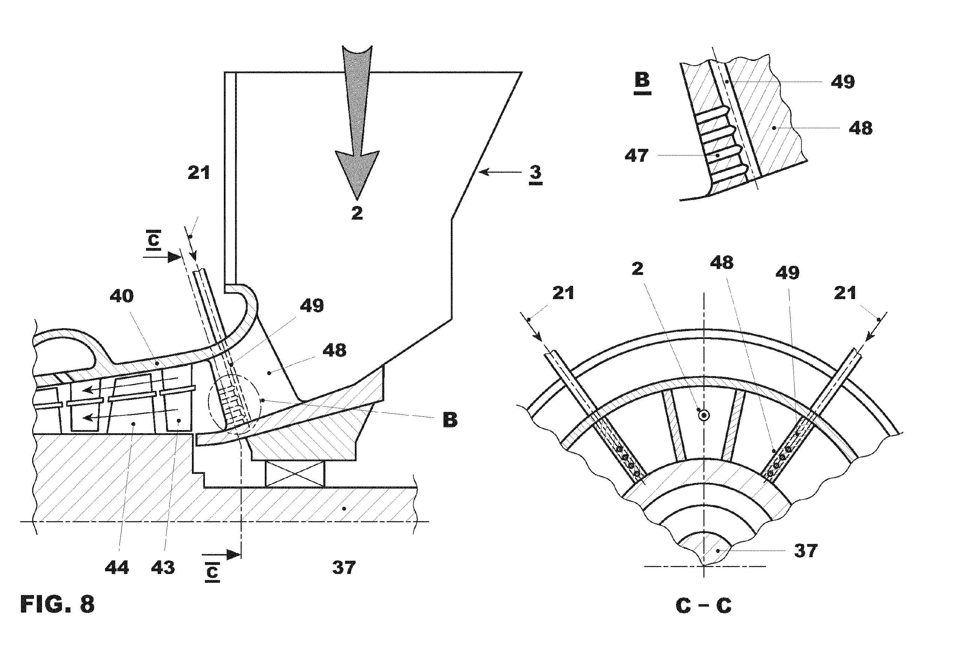

Anstelle einer Zuführung des sauerstoffreduzierten Gases 21 durch separate Zuführungskanäle 39 ist auch eine Einleitung über die Lagestützen 48 des Verdichters 3 möglich, wie in Fig. 8 schematisch dargestellt ist. Die Lagerstützen, 48 verfügen, wie im Detailausschnitt B gezeigt, über mindestens eine Zuführungsbohrung 49, von der aus das sauerstoffreduzierte Gas 21 durch Austrittkanäle 47 parallel zur Hauptströmung in Richtung Verdichtereintritt ausströmt. Die in Umfangsrichtung alternierende Zuführung von sauerstoffreduziertem Gas 21 und Frischluft 2 ist in Schnitt C - C erkennbar.

Der Abstand von Lagerstützen 48, die zur Einleitung von sauerstoffreduziertem Gas 21 genutzt werden, ist dabei so gross zu wählen, dass zwischen jeweils zwei benachbarten Zuführungen ein zweiter Ausschnitt des Verdichtereintritts 3 verbleibt, in dem Frischluft 2 zugeführt wird.

### BEZUGSZEICHENLISTE

- 1: Verdichter
- 2: Frischluft
- 3: Verdichtereinlass
- 3': äusserer Sektor
- 3": innerer Sektor
- 4: Brennkammer
- 5: Brennstoff
- 6: Gasturbine
- 7: Turbine
- 8: Heisse Abgase der Gasturbine
- 9: Abhitzedampferzeuger (heat recovery steam generator, HRSG)
- 10: Abgasgebläse für den zweiten partiellen Abgasstrom (zum CO2-Abscheidesystem)
- 11: Abgasgebläse für den ersten Abgasteilstrom (Abgasrezirkulation)
- 12: Bypassklappe oder Ventil
- 13: Dampfturbine
- 14: Hochdruckbrennkammer
- 15: Niederdruckbrennkammer
- 16: Hochdruckturbine
- 17: Niederdruckturbine
- 18: CO2-Abscheidesystem
- 19: Abgas vom Abhitzedampferzeuger
- 20: Zweiter Abgasteilstrom (Abgasleitung zum CO2-Abscheidesystem)
- 21: Erster Abgasteilstrom (Abgasrezirkulation)
- 22: CO2-armes Abgas
- 23: Abgasrückkühler (für den zweiten Abgasteilstrom)
- 24: Abgasbypass zum Kamin
- 25: Erster Generator
- 26: Zweiter Generator
- 27: Abgasrückkühler (für den ersten Abgasteilstrom)
- 28: Hochdruck- Kühlgas
- 29: Abgasteiler
- 30: Frischdampf
- 31: Abgeschiedenes CO2
- 32: Kamin
- 33: Niederdruck- Kühlgas
- 34: Mitteldruck- Kühlgas
- 35: Rotorkühlgas
- 36: Verdichterplenum
- 37: Welle (auch als Rotor bezeichnet)
- 38: Trennbandsegment
- 39: Zuführungskanal
- 40: Verdichtergehäuse
- 41: Verdichterentnahmestelle
- 42: Frischluft- Regelelement
- 43: Verdichterleitschaufel
- 44: Verdichterlaufschaufel
- 45: Einlassleitblech
- 46: Wellenabdeckung
- 47: Austrittskanäle
- 48: Lagerstütze
- 49: Zuführungsbohrung
- 51: erster Ausschnitt
- 52: zweiter Ausschnitt

## Patentansprüche

1. Verfahren zum Betrieb einer Gasturbine (6) umfassend einen Verdichter (1) mit ringförmiger Eintrittsfläche, mindestens zwei Brenner, eine Brennkammer (4, 14, 15) und eine Turbine (7, 16, 17), **dadurch gekennzeichnet,**
**dass** dem Verdichter (1) mindestens ein erster Ansaugteilstrom aus sauerstoffreduziertem Gas (21), das eine Sauerstoffkonzentration hat, die kleiner als die mittlere Sauerstoffkonzentration des Verdichteransaugstroms ist, und mindestens ein zweiter Ansaugteilstrom aus Frischluft (2) in Umfangsrichtung der Eintrittsfläche alternierend zugeführt werden.

2. Verfahren nach Anspruch 1, **dadurch gekennzeichnet, dass** die alternierende Zuführung von sauerstoffreduziertem Gas (21) und Frischluft (2) über einen inneren Sektor (3") des Eintrittsquerschnitts relativ zu einer Rotationsachse des Verdichters (1) erfolgt und Frischluft (2) über einen äusseren Sektor (3') des Eintrittsquerschnitts relativ zu der Rotationsachse des Verdichters (1) zugeführt wird.

3. Verfahren nach Anspruch 1, **dadurch gekennzeichnet, dass** die alternierende Zuführung von sauerstoffreduziertem Gas (21) und Frischluft (2) über einen inneren Sektor (3") des Eintrittsquerschnitts relativ zu einer Rotationsachse des Verdichters (1) erfolgt und sauerstoffreduziertes Gas (21) über einen äusseren Sektor (3') des Eintrittsquerschnitts relativ zu der Rotationsachse des Verdichters (1) zugeführt wird.

4. Verfahren nach einem der Ansprüche 1 bis 3, **dadurch gekennzeichnet, dass** jeweils ein erster Ansaugteilstrom aus sauerstoffreduziertem Gas (21) in einen oder in ein ganzzahliges Vielfaches an benachbarten Brennern stromab des Verdichters (1) geleitet wird.

5. Verfahren nach einem der Ansprüche 1 bis 4, **dadurch gekennzeichnet, dass** jeweils ein zweiter Ansaugteilstrom aus Frischluft (2) in einen oder in ein ganzzahliges Vielfaches an benachbarten Brennern stromab des Verdichters (1) geleitet wird.

6. Verfahren nach einem der Ansprüche 1 bis 5, **dadurch gekennzeichnet, dass** die Brennstoffzuführung zu einem Brenner, der mit sauerstoffreduziertem Gas (21) versorgt wird, gegenüber der Brennstoffzuführung zu einem Brenner, der mit Frischluft (2) versorgt wird, so reduziert ist, dass die heissen Verbrennungsgase am Austritt der Brenner die gleiche Sauerstoffkonzentration aufweisen.

7. Verfahren nach einem der Ansprüche 1 bis 6, **dadurch gekennzeichnet, dass** der Verdichtereinlass (3), an den der Strömungskanal des Verdichters (1) anschliesst, in mindestens einen ersten Ausschnitt (51) und einen zweiten Ausschnitt (52) geteilt ist, deren Austritte in Umfangsrichtung um den Verdichtereintritt alternierend angeordnet sind, wobei jeweils abwechselnd Frischluft (2) über den mindestens einen ersten Ausschnitt (51) und sauerstoffreduziertes Gas (21) über den mindestens einen zweiten Ausschnitt (52) zugeführt wird.

8. Verfahren nach einem der Ansprüche 1 bis 7, **dadurch gekennzeichnet, dass** die Abgase der Gasturbine (6), in einen ersten Abgasstrom (21) zur Rezirkulation in den Ansaugstrom (3) der Gasturbine (6) und in einen zweiten Abgasteilstrom (20) zur Abgabe an die Umgebung geteilt werden, und dass das sauerstoffreduzierte Gas (21) den rezirkulierten ersten Abgasstrom (21) der Gasturbine umfasst.

9. Gasturbinenkraftwerk umfassend eine Gasturbine (6) mit einem Verdichtereinlass (3), einem Verdichter (1) mit ringförmiger Eintrittsfläche,
mindestens zwei Brennern, einer Brennkammer (4), und einer Turbine (7), **dadurch gekennzeichnet,**
**dass** der Verdichtereinlass (3), an den der Strömungskanal des Verdichters (1) anschliesst, mindestens einen ersten Ausschnitt (51) und mindestens einen zweiten Ausschnitt (52) umfasst, die in Umfangsrichtung um einen Verdichtereintritt alternierend angeordnet sind, wobei eine Zuführung für ein sauerstoffreduziertes Gas (21), das eine Sauerstoffkonzentration hat, die kleiner ist als die mittlere Sauerstoffkonzentration des Verdichteransaugstroms während des Betriebes der Gasturbine (6), an den mindestens einen ersten Ausschnitt (51) des Verdichtereinlasses (3) angeschlossen ist und eine Frischluftzuleitung an den mindestens einen zweiten Ausschnitt (52) des Verdichtereinlasses (3) angeschlossen ist.

10. Gasturbinenkraftwerk nach Anspruch 9, **dadurch gekennzeichnet, dass** der Verdichtereinlass (3), an den der Strömungskanal des Verdichters (1) anschliesst, einen inneren Sektor (3") relativ zur Rotationsachse des Verdichters (1) und einen äusseren Sektor (3') relativ zur Rotationsachse des Verdichters (1) umfasst, wobei die alternierenden ersten Ausschnitte (51) und zweiten Ausschnitte (52) in dem inneren Sektor (3") Eintrittsquerschnitts relativ zu einer Rotationsachse des Verdichters (1) angeordnet sind.

11. Gasturbinenkraftwerk nach Anspruch 9, **dadurch gekennzeichnet, dass** der Verdichtereinlass (3), an den der Strömungskanal des Verdichters (1) anschliesst, einen inneren Sektor (3") relativ zur Rotationsachse des Verdichters (1) und einen äusseren Sektor (3') relativ zur Rotationsachse des Verdichters (1) umfasst, wobei die alternierenden ersten Ausschnitte (51) und zweiten Ausschnitte (52) in dem äusseren Sektor (3') Eintrittsquerschnitts relativ zu einer Rotationsachse des Verdichters (1) angeordnet sind.

12. Gasturbinenkraftwerk nach einem der Ansprüche 9 bis 11, **dadurch gekennzeichnet, dass** pro erstem Ausschnitt (51) des Verdichters ein ganzzahliges Vielfaches von Brennern angeordnet ist und das pro zweitem Ausschnitt (52) ein ganzzahliges Vielfaches von Brennern angeordnet ist.

13. Gasturbinenkraftwerk nach einem der Ansprüche 10 bis 12, **dadurch gekennzeichnet, dass** es ein Regelelement umfasst, durch dass das Flächenverhältnis der Summe der Anschlussflächen des mindestens einen ersten Ausschnitts (51) an den Strömungskanal des Verdichters (1) zur Summe der Anschlussflächen der Summe der Anschlussflächen des mindestens einen zweiten Ausschnitts (52) an den Strömungskanal des Verdichters (1) variiert werden kann, um die Flächenverhältnisse an Änderungen des Verhältnisses zwischen zugeführter Frischluft (2) und sauerstoffreduziertem Gas (21) anzugleichen.

14. Gasturbinenkraftwerk nach Anspruch 9, **dadurch gekennzeichnet, dass** eine Vielzahl von Zuführungskanälen (39) von Zuführungsbohrungen (49) in den Lagerstützen (48) des Verdichters (1) zur Einleitung des sauerstoffreduzierten Gases (21) in dem Verdichtereinlasse (3) konzentrisch zur Achse der Gasturbine (6) in Umfangsrichtung verteilt angeordnet ist.

15. Gasturbinenkraftwerk nach einem der Ansprüche 10 bis 14, **dadurch gekennzeichnet, dass** das Gasturbinenkraftwerk einem Abgasteiler (29) zur Aufteilung des Abgasstroms der Gasturbine (6) in einen ersten Abgasteilstrom (21) zur Rezirkulation in den Ansaugstrom der Gasturbine (6) und einen zweiten Abgasteilstrom (20) zur Abgabe an die Umgebung umfasst sowie eine Rezirkulationsleitung umfasst, die den Abgasteiler (28) mit mindestens einem ersten Ausschnitt (51) des Verdichtereinlasses (3) verbindet.
